# EUROPEAN PATENT APPLICATION

(11) **EP 4 481 868 A1**
(43) Date of publication of application: **25.12.2024**
(21) Application number: 23220142.6
(22) Date of filing: 22.12.2023
(51) Int. Cl.: H01M 10/04, H01M 10/613, H01M 10/625, H01M 10/658, H01M 50/209, H01M 50/24, H01M 50/249, H01M 50/291, H01M 50/293

(54) **THERMAL BARRIER COMPONENT FOR BATTERY ASSEMBLY, BATTERY ASSEMBLY, MANUFACTURING PROCESSES FOR THE THERMAL BARRIER COMPONENT AND THE BATTERY ASSEMBLY**

(30) Priority: 21.06.2023 EP 23180595
(71) Applicant: Lilium GmbH, 82234 Wessling (DE)
(72) Inventor: The designation of the inventor has not yet been filed
(74) Representative: Weickmann & Weickmann PartmbB

(57) **Abstract**

A thermal barrier component 10 for a battery assembly 50 includes a stack 11 of layers, the stack 11 comprising a core layer 12 and at least one thermal insulation layer 14 arranged on at least one side of the core layer 12, the core layer 12 including an inlet 18 comprising a rigid material, preferably a rigid foam material or an aluminium honeycomb structure, and a frame element 20 circumferentially surrounding the inlet 18.

Furthermore, the invention is directed to a battery assembly and manufacturing processes for the thermal barrier component and the battery assembly.

## Description

The present invention relates to a thermal barrier component for a battery assembly, in particular for a battery assembly to be used in an electric aircraft, e.g. an electric vertical take-off and landing (eVTOL) aircraft and to a process for manufacturing the thermal barrier component. Furthermore, protection is also claimed for a battery assembly comprising such a thermal barrier component and for the process for manufacturing a battery assembly.

Under certain conditions such as electrical failures or defective cooling, rechargeable battery assemblies with high energy density such as assemblies based on Li-ion batteries may go into thermal runaway.

These batteries usually comprise a plurality of battery modules, each battery module comprising at least one battery cell, preferably several stacked battery cells, e.g. each battery module comprising at least six battery cells.

In the event of thermal runaway, the affected battery module generates a significant amount of heat. If there is no sufficient thermal insulation between adjacent modules, the high temperatures can cause neighboring modules to go into thermal runaway too, and thus the thermal runaway can propagate through the entire battery assembly.

In order to ensure the safety of the device in which the battery assembly is used, in particular if the device is an aircraft, it is necessary to prevent thermal runaway originating in a given battery cell module from propagating to adjacent modules.

For example, although temperatures in an affected battery module could be up to 1500°C during a thermal runaway event, the temperature of adjacent modules should still not exceed e.g. 130°C in order not to trigger a propagating reaction.

A conventional technique known as battery potting is to embed the battery cells in a resin material for the purpose of providing thermal insulation as well as resistance to shock and vibration. Battery potting, however, requires a rather complex assembly process and considerably increases the weight of the resulting assembly.

Another known solution is to provide thermal barrier components with a low thermal conductivity as thermal insulation between adjacent battery cell modules.

However, during thermal runaway, not only high temperatures but also high pressures occur, resulting in high mechanical loads and erosion processes due to high velocity particles.

Against this background, the object of the invention is to provide an improved kind of thermal barrier component that is lightweight, easy to integrate into the battery assembly and suitable to resist the thermal loads, high pressures, and mechanical loads occurring during thermal runaway in order to contain the reaction and to prevent or reduce the propagation of thermal runaway to adjacent battery cell modules.

This object is solved by a thermal barrier component for a battery assembly with the features of claim 1 and by a process for manufacturing a thermal barrier component with the features of claim 17.

The thermal barrier component according to the present invention includes a stack of layers, the stack comprising a core layer and at least one thermal insulation layer and/or an erosion barrier layer arranged on at least one side of the core layer, the core layer including an inlet comprising a rigid material, preferably a rigid foam material, and a frame element circumferentially surrounding the inlet.

One of the main ideas of the present invention is to form the thermal barrier component as a multi-layered stack, wherein the different functions of the component such as providing resistance to high mechanical loads or pressures on the one hand and to high thermal loads on the other hand are provided by different layers tailored to their respective tasks.

The thermal barrier component serves a dual purpose as a thermal barrier and as a structural component by connecting to the battery housing and contributing to overall stiffness of the battery assembly and resistance to overpressure from a thermal runaway event.

Thermal barrier components according to the invention can be used to define and to separate compartments in a battery assembly, each compartment accommodating a battery cell module comprising e.g. 6 to 18 stacked battery cells, in particular pouch cells.

In particular, the thermal barrier component can be configured to withstand a burst pressure of e.g. up to 6 bar and/or temperatures of e.g. up to 1500°C.

In addition, the proposed structure of the thermal barrier makes it possible not to insulate each cell with a thermal barrier element, but to group at least 2 cells, preferably 6-18 cells, together. This considerably reduces the weight of the battery stack.

The overall thickness of the thermal barrier component, i.e. its dimension along the stacking direction, can be not larger than 20 mm and can be in particular between 9 mm and 20 mm, preferably around 16 mm, for low weight and pack size while maintaining the desired thermal and mechanical performance, at least for the variant with thermal insulation layers provided on both sides of the core layer. The thickness of the component with thermal insulation layers provided only on one side of the core layer can of course be smaller. Here, the thickness refers to the uncompressed state of the component.

According to the invention, the core layer includes an inlet comprising a rigid material, in particular a rigid foam material, preferably a structural foam material, e.g. based on polymethacrylimide (PMI) such as Rohacell^{®}, or e.g. an aluminium honeycomb structure. In this manner, the inlet is lightweight and yet suitable for carrying the shear loads occurring during thermal runaway. In particular, the foam material or the honeycomb structure can also provide some thermal insulation.

The inlet can comprise or consist of an inlet material that has at least one of the properties listed in the table below, preferably several or even all of these properties:

| Property of inlet material | Best performance | Desired range | Acceptable Range |
|---|---|---|---|
| Shear strength (MPa) | 5 | 1.2 - 7 | 0.5 - 15 |
| Compression Strength (MPa) | 7 | 2.5-10 | 1 - 20 |
| Density (kg/m³) | 200 | 50 - 300 | 10 - 500 |
| Thermal conductivity (W/m·K) | 0.045 | 0.015 - 0.15 | 0.011 - 0.55 |
| Thermal stability (°C) | 320 | 200 - 500 | 150 - 1000 |

The temperature given under "thermal stability" refers to a temperature at or up to which the mass loss does not exceed 20% when the material is heated at 20°C/min in nitrogen.

In particular, the inlet material can have a shear strength between 0.5 MPa and 15 MPa and a density between 10 kg/m³ and 500 kg/m³, preferably a shear strength of between 1.2 MPa and 7 MPa and a density between 50 kg/m³ and 300 kg/m³.

The frame element is provided to circumferentially surround the inlet of the core layer in order to protect the edges of the inlet against high temperatures and/or flames.

The frame element can comprise or consist of a frame material that has at least one of the properties listed in the table below, preferably several or even all of these properties.

For example, the frame element can comprise or consist of a flame-resistant material, in particular a flame-resistant glass fiber reinforced polymer (GFRP) material, e.g. FR4 or FR5 NEMA, or a polymer such as PEEK, or a polyimide.

With regard to manufacturing techniques, the frame element can be made e.g. by water jet cutting, injection molding, pressing, or stamping.

| Properties of frame material | Best performance | Desired range | Acceptable Range |
|---|---|---|---|
| In-plane Tensile Strength (MPa, Room Temp.) | 240 | 200 - 450 | 150 - 1000 |
| Out-of-plane Compressive Strength (MPa, Room Temp.) | 400 | 300 - 500 | 250 - 800 |
| Density (kg/m3) | 1.9 | 1.4 - 3.0 | 1.0-5.0 |
| Limiting Oxygen Index (%) | 60 | 40-70 | 25-75 |
| Dielectric Strength (kV/mm) | 15 | 10-20 | 6-25 |

The frame element and the inlet can be attached to each other by means of co-curing, in particular with film adhesives, preferably together with any other components of the core layer as described below.

In this application, terms like circumferential or axial preferably refer to the stacking direction of the stack as an axial direction.

The frame element circumferentially surrounding the inlet thus means that the frame element covers those surface portions of the inlet that have a surface normal which is substantially perpendicular to the stacking direction.

In order to protect the core layer against high temperatures, at least one thermal insulation layer can be arranged on at least one side of the core layer. Preferably, at least two thermal insulation layers are provided, one of which is arranged on a first side of the core layer and the other one is arranged on a second side of the core layer opposite the first side, so that the two thermal insulation layers sandwich the core layer.

As an alternative or in addition, an erosion barrier layer can be arranged on at least one side of the core layer, in particular in addition to and covering the thermal insulation layer or layers, in order to protect the component from high velocity particles and gases as explained in more detail below.

The overall thickness of the core layer, i.e. its dimension along the stacking direction can be less than 1 cm and can be in particular between 3 mm and 5 mm, preferably around 4 mm for low weight and pack size while maintaining the desired thermal and mechanical performance.

It is noted that the thermal barrier layer(s) and/or the erosion barrier layer(s) can be attached to each other and/or to the core layer, e.g. by double-sided adhesive tape, or they can be provided as floating layers that are held in position by compression in the battery assembly.

According to a particular example, the thermal barrier component comprises thermal insulation layers only on one side of the core layer. This component can be used as a compression plate of a battery stack. Preferably, the outermost thermal insulation layer of such a component is covered by an erosion barrier layer as described below.

The thermal insulation layer can comprise an aerogel, in particular a silica aerogel. More in particular, the thermal insulation layer can comprise blankets incorporating silica aerogel into non-woven fibers. Preferably, the thermal insulation layer is compressible.

The thermal insulation layer preferably comprising a silica aerogel has the technical effect to insulate structural components, and the neighboring battery module/cells from the intense heat release during thermal runaway and to prevent that the thermal runaway is propagated to a neighboring battery module. In addition, thermal insulation layers, in particular the silica aerogel layers, are advantageous as they provide cell compression to the battery cells, preferably pouch cells.

It is noted that the term "layer" as used in this application includes a configuration in which a given layer comprises several sub-layers.

In particular, a thermal insulation layer can comprise 1 to 4 sub-layers, in particular 3 sub-layers, each sub-layer having a thickness of e.g. between 1 and 3 mm, in particular around 2 mm.

The overall thermal insulation layer on one or each side of the core layer can have a thickness of between 3 mm and 8 mm, preferably between 4 mm and 6 mm and in particular of around 5mm, all in an uncompressed state.

The thermal insulation layer can comprise or consist of a thermal insulation material that has at least one of the properties listed in the table below, preferably several or even all of these properties:

| Properties of thermal insulation material | Best performance | Desired range | Acceptable Range |
|---|---|---|---|
| Compression Stiffness (MPa) | 1.3 | 1 -2.5 | 0.5-5 |
| Compression Set (%) | 10 | 5-15 | 3-25 |
| Density (kg/m3) | 175 | 150 - 250 | 75 - 450 |
| Thermal conductivity (W/m-K) | 0.013 | 0.012 - 0.100 | 0.011 - 0.3 |
| Thermal stability (°C) | 750 | 500 - 900 | 400 - 2000 |

It is noted that the term compression stiffness as used herein refers to the slope of the compression stress vs. strain curve measured at 40%.

According to a particular embodiment, the component furthermore comprises a plurality of studs or inserts distributed around a circumference of the frame element, each stud or insert being partially embedded within the frame element and partially projecting therefrom in an outward direction in particular perpendicular to the stacking direction.

The studs or inserts held in position by the frame element can be used as fastening elements for fastening the thermal barrier component to e.g. housing walls of a battery assembly. For stability reasons, the studs or inserts can comprise or consist of a metal material, in particular titanium.

In order to provide primary bending and tension resistance, the core layer can furthermore comprise two cover panels, e.g. made from a carbon fiber reinforced polymer (CFRP) material, in particular from woven epoxy CFRP plies, so that both the inlet and the frame element of the core layer are disposed between the two cover panels and the core layer has a sandwich structure.

The inlet, the frame element and the studs can be attached to the cover panels of the core layer by means of film adhesives, e.g. by co-curing.

In order to better withstand high velocity gases and flying particles propelled by the high pressures occurring during thermal runaway, the stack can furthermore comprise at least one erosion barrier layer forming an outermost layer of the stack, preferably two erosion barrier layers forming outermost layers on opposite sides of the stack. The erosion barrier layer(s) can comprise or consist of a fiber reinforced polymer, in particular a CFRP material, more in particular a phenolic CFRP material.

The erosion barrier layer can comprise or consist of an erosion barrier material that has at least one of the properties listed in the table below, preferably several or even all of these properties:

| Properties of erosion barrier material | Best performance | Desired range | Acceptable Range |
|---|---|---|---|
| In-plane Tensile Strength (MPa) | 550 | 400 - 700 | 250 - 3000 |
| Density (kg/m³) | 1550 | 1000 - 2000 | 800 - 3500 |
| Thermal stability (°C) | 1500 | 1200 -1800 | 800 - 2200 |
| Fiber areal weight (gsm) | 250 | 150 - 425 | 75 - 700 |

The erosion barrier layer can e.g. have a thickness of between 0.4 mm and 1.5 mm.

The disclosed stack of layers provides the best compromise between the different requirements for the thermal barrier component, those requirements comprising lightweight design, compressibility in order to account for and/or prevent/reduce cell swelling, stiffness, thermal insulation and thermal resistance.

In order to facilitate the assembly, the stack can be symmetrical with respect to a middle plane passing through the core layer, so that the thermal barrier component can be installed in at least two different orientations.

According to a particular embodiment of the invention, the frame element can comprise a closed border section and at least one inner bridge section connecting opposite sides of the border section, wherein the inlet comprises at least two inlet portions separated by the bridge section. The bridge sections can increase the resistance of the thermal barrier component to different mechanical loads, e.g. increasing the bending or torsional stiffness of the component.

In order to hold the studs or inserts more securely in position, the at least one bridge section of the frame element can connect two opposite anchoring portions of the frame element, each anchoring portion having one of the studs or inserts embedded therein.

Each of the studs can have a retaining protrusion preventing the stud from being pulled out of the frame element. The studs can e.g. have a T-shape, the upper horizontal bar of the T forming the retaining protrusions. The distal ends of the studs can be threaded.

In order to electrically connect the battery cells adjacent to the thermal barrier component and allow a high voltage feedthrough between adjacent modules, the thermal barrier component can comprise a connector plate and an electrically insulating connector plate holder, the connector plate holder having a mounting surface for the connector on a first side of the connector plate holder and being connected to an edge region of the stack of layers on a second side of the connector plate holder opposite the first side.

For example, the connector plate holder can comprise a mounting groove on the second side of the connector plate holder, wherein an edge region of the core layer of the stack of layers can be inserted into the mounting groove in order to attach the connector plate holder.

For better electrical insulation, woven glass fiber electrical insulation can be provided on or wrapped around all electrically conducting parts of the thermal barrier component in proximity to the connector plate, in particular on or around all CFRP parts in proximity to the connector plate.

In this context, it is noted that the erosion barrier layers are to be regarded as forming the outermost layers of the stack as long as long as they form the outermost surface over at least 50%, preferably over at least 80% or 90% of the entire surface of the stack.

According to a particular embodiment, at least one of the studs or inserts can extend through a hole provided in the connector plate holder which also helps in correctly positioning the connector plate during assembly.

Protection is also claimed for a battery assembly comprising a housing and at least one battery stack accommodated within the housing, each battery stack comprising at least one thermal barrier component, in particular a plurality of thermal barrier components, and at least one battery module with at least one battery cell, preferably several such battery modules, wherein the battery module or modules and the thermal barrier component or components are stacked in an alternating manner and wherein the thermal barrier component or components is or are fixedly attached to the housing.

By fixedly attaching the preferably plate-shaped thermal barrier component(s) to the housing, in particular to circumferential walls of the stack housing, these barrier components become part of the mechanical load carrying structure of the assembly, defining compartments for the battery module(s), irrespective of the internal structure of the thermal barrier component. Therefore, it is contemplated to claim protection for such a battery assembly, even if the thermal barrier components do not conform to the invention as described above. Nevertheless, according to a particular embodiment, the thermal barrier component(s) is/are thermal barrier component(s) according to the invention as described above.

The circumferential or side walls of the housing to which the thermal barrier components are attached are used for containment and sealing as well as for supporting the stack compression loads.

As explained above, each battery module comprises at least one battery cell, preferably a plurality of stacked battery cells, in particular pouch cells.

Preferably, the thermal barrier component/components of the stack is/are attached to the housing by means of studs or inserts provided on or integrated with the thermal barrier component/components as described above, or by means of separate fasteners connecting the housing to the thermal barrier component/components. These fasteners can be e.g. inserted from the outside through walls of the housing and into the thermal barrier component(s).

In this manner, the thermal barrier components are stably anchored in the housing and prevent or reduce propagation of thermal runway from one battery module to another while also supporting the cell stack and providing stability and stiffness to the assembly.

For the sake of completeness, it is noted that each battery module preferably comprises several stacked battery cells, e.g. six battery cells. However, this should not exclude a configuration in which a battery module consists of a single battery cell. Furthermore, a battery assembly according to the invention may comprise several battery stacks or only a single battery stack.

According to a particular embodiment, the stack can comprise only one battery module disposed between two thermal barrier components according to the invention. Those thermal barrier components are used as compression plates and preferably have thermal insulation and optionally erosion barrier layers provided only on one side of the core layer.

According to another particular embodiment, the stack can comprise only one thermal barrier component according to the invention disposed between two battery modules, this thermal barrier component comprising thermal insulation and optionally erosion barrier layers provided on both sides of the core layer.

However, in many cases, the stack will comprise a plurality of thermal barrier components according to the invention and a plurality of battery modules that are stacked in an alternating manner.

The mechanical cell requirements are a major factor for the conceptual architecture of the design, i.e. the cells shall be compressed for optimal and safe operation. Furthermore, cells change their thickness due to changes of state of charge and aging effects. Specifically, following compression conditions shall be met:
When the cell is at minimum thickness (= initial assembly condition), the cell shall be compressed with a minimum of 6 psi, and when the cell is at maximum thickness the maximum pressure on the cell shall be less than 60 psi.

To enable both requirements foam pads (between cells) with non-linear stiffness behavior and compressible thermal insulation layers (on the thermal barrier component) can be used.

Therefore, according to a particular embodiment, foam pads can be arranged between adjacent battery cells of the battery module/modules and preferably also between the thermal barrier component(s) and the immediately adjacent battery cell(s). The material of the foam pads can e.g. be a urethane elastomer foam.

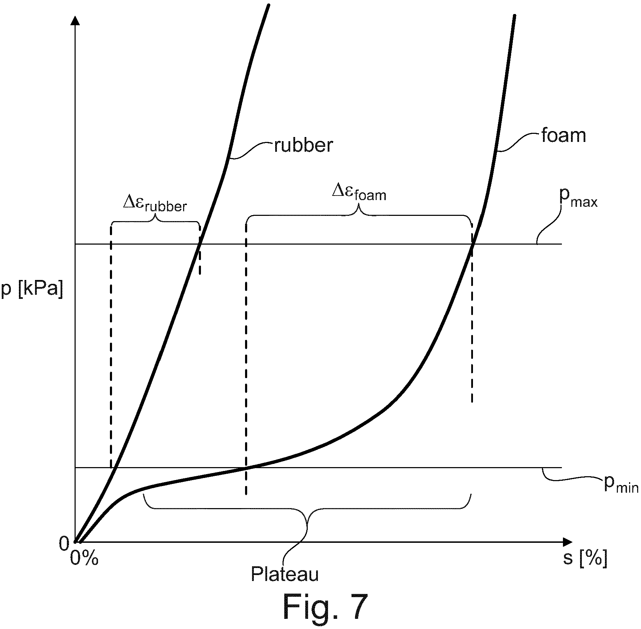

Foam pads can be used in particular for their non-linear stiffness behavior explained in more detail below with respect to Fig. 7. Compared to conventional elastic materials such as rubber, using foam pads makes it possible to accommodate the change of cell thickness due to swelling with a thinner compression pad while still providing sufficient initial compression.

In particular, the height of a battery module and the heights/thicknesses of the foam pads and of the thermal insulation layers of the thermal barrier components sandwiching the battery module can be chosen so that a minimum desired pressure limit is reliably achieved for the battery module in its initial state, and the expected cell swelling can be accommodated by additional deformation of the thermal insulation layers and of the foam pads with the pressure in the module not exceeding a maximum desired pressure limit.

The foam pads can comprise or consist of a foam pad material that has at least one of the properties listed in the table below, preferably several or even all of these properties:

| Properties of foam pad material | Best performance | Desired range | Acceptable Range |
|---|---|---|---|
| Compression set (%) | 5 | 3-10 | 2-20 |
| Density (kg/m³) | 190 | 125 - 225 | 75 - 350 |
| Thermal conductivity (W/m·K) | 0.050 | 0.035 - 0.25 | 0.015 - 1.25 |
| Compression stiffness (MPa) | 0.200 | 0.1 - 0.400 | 0.05 - 1.5 |

According to an aspect of the invention, a process for manufacturing a thermal barrier component according to the invention as described above comprises the following steps:
forming a core layer,
arranging at least one thermal insulation layer on at least one surface of the core layer and/or arranging at least one erosion barrier layer on at least one surface of the core layer in order to form a stack of layers,
wherein the step of forming the core layer comprises providing an inlet comprising a rigid material, preferably a rigid foam material, and a frame element circumferentially surrounding the inlet, and co-curing the inlet and the frame element, preferably by means of film adhesives.

According to a particular example, two thermal insulation layers are arranged on or attached to opposite surfaces of the core layer.

Preferably, a thermal insulation layer is arranged on an outer side of the core layer and an erosion barrier layer is arranged on an outer side of the thermal insulation layer.

If the core layer comprises additional components such as the studs or the cover panels as described above, these additional components are preferably co-cured together with the inlet and the frame element, in particular with film adhesives.

The thermal insulation layer(s) can be attached to the core layer and the erosion barrier layer(s) can be attached to the thermal insulation layer(s) (if provided) or to the core layer, e.g. by means of double-sided tape, or the thermal insulation layer(s) and/or the erosion barrier layer(s) can be provided as "floating layers" as explained above.

Protection is also claimed for a process for manufacturing a battery assembly, the process comprising the following steps:
providing at least one thermal barrier component, preferably several thermal barrier components, wherein the step of providing the at least one thermal barrier component preferably comprises the process for manufacturing a thermal barrier component according to the invention as described above,
providing at least one battery module, preferably a plurality of battery modules, each battery module comprising at least one battery cell, preferably a plurality of stacked battery cells,
stacking the thermal barrier component or thermal barrier components and the battery module or battery modules in an alternating manner in order to form a battery stack,
compressing the battery stack, preferably to a predefined stack height, accommodating the compressed battery stack in a housing, and attaching the thermal barrier component or components of the battery stack to the housing.

If the thermal barrier components do not have integrated studs or inserts, suitable fasteners can be inserted from outside through the housing and into the thermal barrier components.

It is noted that the steps of accommodating the compressed battery stack in the housing and attaching the thermal barrier component(s) of the stack to the housing do not have to be performed in this order and can overlap. In particular, the side walls or circumferential walls can be separately attached to the thermal barrier components, and this step can be a part of a process of assembling the housing around the battery stack.

In the following, the present invention is described in more detail with reference to particular embodiments of the invention as illustrated in the enclosed drawings.
- **Fig. 1**: is a perspective view of a thermal barrier component according to a first embodiment of the invention.
- **Fig. 2**: is an enlarged cross-section view of a front-end region of the component in **Fig. 1****,** taken along the xz-plane as sectional plane.
- **Fig. 3**: is a perspective view of a part of the component of Fig. 1 without the erosion barrier layers and the thermal insulation layers.
- **Fig. 4**: illustrates in parts a) to c) how thermal barrier components and battery modules are assembled into a battery stack and several battery stacks are assembled to form a battery assembly according to an embodiment of the invention.
- **Fig. 5**: is a schematic view illustrating in Figs. a) to c) several stages of a process for manufacturing a battery assembly according to a further embodiment of the invention.
- **Fig. 6**: shows in Figs. a) and b) a part of a battery stack of a battery assembly according to an embodiment of the invention in an initial state and after cell swelling.
- **Fig. 7**: is a diagram showing the compression pressure as a function of compression strain for an exemplary rubber material and an exemplary foam material.
- **Fig. 8**: visualizes the compression pressure in a battery module of a battery assembly according to an embodiment of the invention as a function of the cell thickness.

It is noted that in order to improve readability, if a figure comprises several identical features, only a single or a few selected of these identical features is or are provided with reference signs. Furthermore, not all features of each figure are provided with a reference sign but only those that are necessary or useful for explaining the respective drawing.

Corresponding or identical features in different embodiments are denoted by the same reference sign. Additional embodiments are mainly described in so far as they differ from the first embodiment. Otherwise, reference is made to the description of the first embodiment.

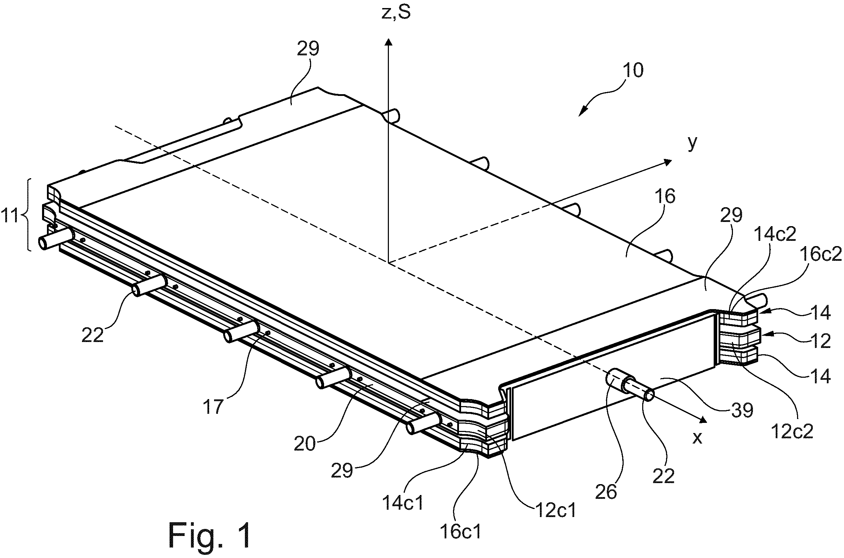

The thermal barrier component 10 according to an embodiment of the invention as illustrated in **Fig. 1** comprises a stack 11 of layers including a core layer 12, two thermal insulation layers 14 arranged on opposite sides of the core layer 12, and two erosion barrier layers 16 forming the outermost layers of the stack 11, the layers being stacked in a stacking direction S coinciding with the z-direction in the coordinate system as illustrated in Fig. 1.

Overall, the component 10 is plate-shaped, and in a top view along the stacking direction S, the layers 12, 14, 16 all have a roughly rectangular form, with small cutouts 12c1, 14c1, 16c1 at the four corners for accommodating a corner seal provided in the battery assembly (not shown) and a larger cutout 12c2, 14c2, 16c2 at the front end where a connector plate 39 is provided on a connector plate holder 26.

Several studs 22 are distributed around the circumference of the core layer 12 and project therefrom in an outward direction perpendicular to the stacking direction S. As explained later on, the studs 22 serve to fix the position of the thermal barrier component 10 within the battery assembly.

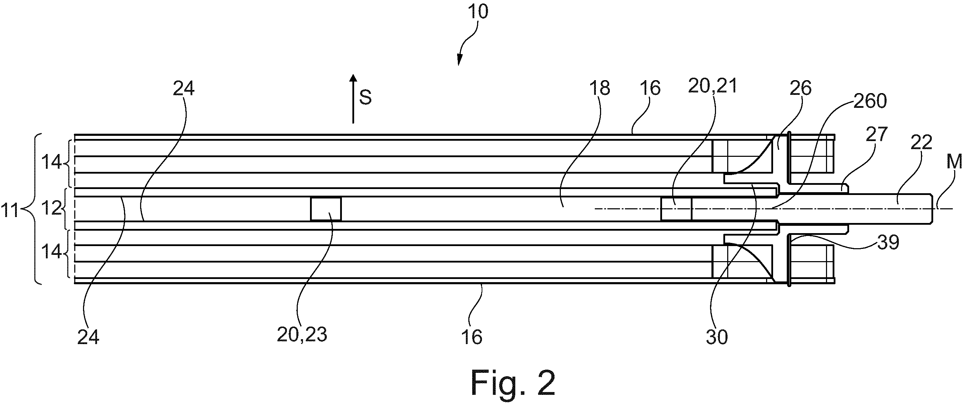

As illustrated in the cross-sectional view of **Fig. 2****,** the thermal barrier component 10 is preferably symmetrical with respect to a middle plane M passing through the core layer 12, the middle plane M coinciding with the xy-plane in the coordinate system of **Fig. 1****.**

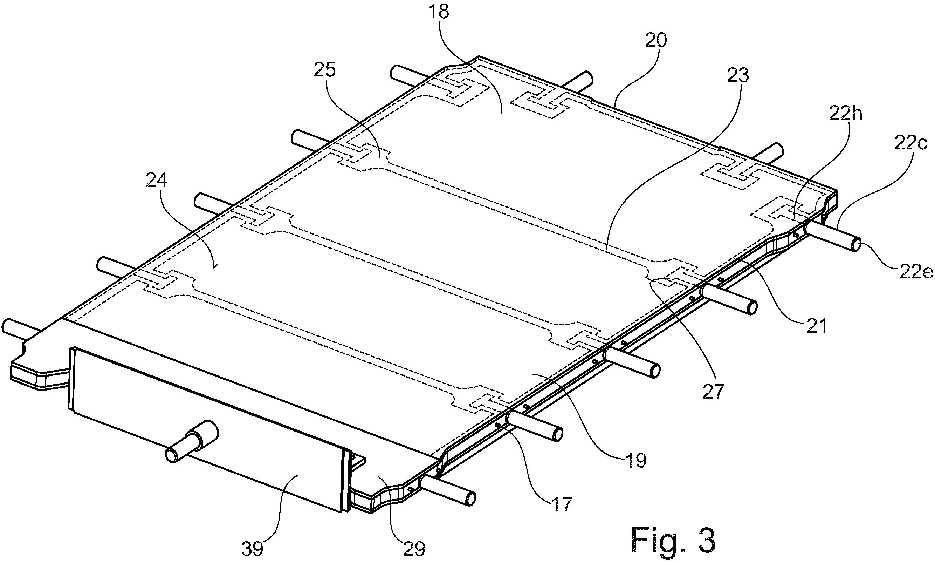

The core layer 12 comprises an inlet 18, a frame element 20 circumferentially surrounding the inlet 18 (cf. also **Fig. 3**), as well as two cover panels 24 sandwiching both the inlet 18 and the frame element 20.

In order to carry the shear loads occurring during a thermal runaway while staying lightweight, the inlet 18 preferably comprises or consists of a rigid foam material, preferably a structural foam material, more preferably based on polymethacrylimide (PMI) such as for example Rohacell ^{®} WF200. As another lightweight yet rigid and stable alternative, an aluminium honeycomb structure can be used for the inlet.

The frame element 20 can be made from a flame-resistant fiber reinforced polymer, in particular GFRP, e.g. FR4 or FR5 NEMA, or from a polymer such as PEEK, or from a polyimide, by techniques such as water jet cutting, injection molding, pressing, or stamping.

The main purpose of the frame element 20 is to seal the foam inlet 18 from high temperatures and/or flames and to hold the studs 22 in position. Furthermore, it can serve to increase the overall stiffness of the component 10 and/or to provide seal land for a seal element (not shown) provided between the thermal barrier component 10 and a circumferential side wall of the stack housing.

In order to improve the bending and tension resistance of the core layer 12, the inlet 18 and the frame element 20 are disposed between two cover panels 24 which are part of the core layer 12 and can comprise a fiber reinforced polymer, preferably woven epoxy CFRP plies.

Preferably, the studs 22 and the core layer 12 are co-cured with film adhesives e.g. based on polyester and/or a suitable epoxy resin in order to bond the foam inlet 18, the frame element 20 and the studs 22 to the cover panels 24 and/or prepregs thereof while improving production time and cost. The thickness of the core layer 12 can be around 5 mm.

In the present example, each thermal insulation layer 14 comprises several, e.g. three, sublayers, each sublayer comprising a silica aerogel which can in particular be incorporated into a non-woven fiber material. The uncompressed thickness of each sublayer can be e.g. from 1 mm to 3 mm, and can be preferably around 2 mm.

One main purpose of the thermal insulation layers 14 is to thermally insulate the structural components of the thermal barrier component, in particular the inlet of the core layer, and the neighboring battery cells or modules from the intense heat release during thermal runaway to prevent or reduce propagation of the reaction. Furthermore, they can provide cell compression. For example, cell compression loads of around 60 psi can be achieved.

The erosion barrier layers 16 protect the more delicate thermal insulation layers 14 from high velocity gases and particles during thermal runaway, and they contain insulation dust during assembly. They have to be resistant to abrasion and suitable to survive high temperatures of e.g. up to 1500°C and may comprise e.g. one ply of phenolic CFRP and two plies of GFRP.

The electrically insulating connector plate holder 26 is mounted to the stack 11 and the connector plate 39 is attached to a first side of the connector plate holder 26. More specifically, an edge region of the core layer 12 forming a front wall rib is inserted into a mounting groove 30 provided on a second side of the connector plate holder 26 opposite the connector plate 39. Cell tabs of adjacent battery cells can be welded to the connector plate 39 in order to electrically connect adjacent battery modules separated by the thermal barrier component 10.

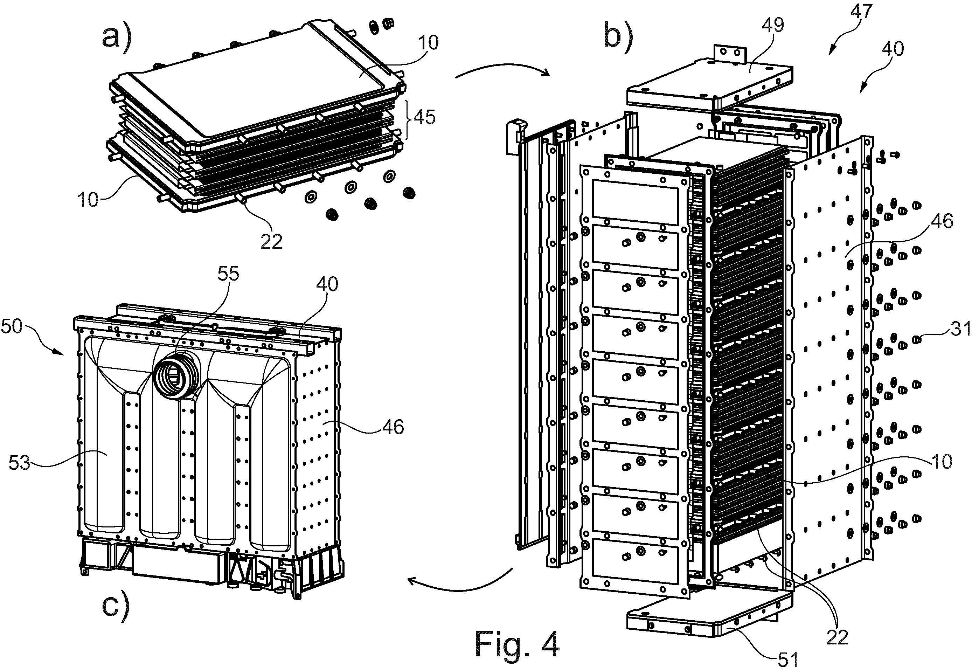

One of the studs 22 extends through a hole 260 and a cylindrical boss 27 of the connector plate holder 26. This stud 22 can be longer than the other studs to support the front circumferential wall of the stack housing as shown in **Fig. 4****.** Overall, the length of the studs 22 can depend on the wall thickness of the stack housing.

In the longitudinal edge regions, in particular near the connector plate holder 26, all layers comprising carbon fibers, e.g. the erosion barrier layers 16 and the cover panels 24 can be provided with an additional electrical insulation 29 e.g. comprising woven glass fibers.

As shown in **Fig. 3****,** in which the thermal insulation layers 14 and the erosion barrier layers 16 are omitted, the frame element 20 comprises a closed border section 21 that is roughly rectangular in a top view along the stacking direction S and forms the outer edge of the core layer 12, and several inner bridge sections 23 connecting opposite sides of the border section 21, the bridge sections 23 separating several separate inlet portions 19 of the inlet 18, in the present example four inlet portions 19.

To be more specific, the inner bridge sections 23 in the present example are straight, extend along the width direction of the component 10 and connect opposite anchoring portions 25 of the frame element 20, each anchoring portion 25 having one of the studs 22 embedded therein. It is noted that the internal structures of the frame element 20 and in particular the inner bridge sections 23 are illustrated in dashed lines in **Fig. 3** because in reality, they are usually covered and hidden by the cover panel 24.

As shown in **Fig. 3****,** the studs 22 of the present example have a flat T-shaped head 22h with protrusions 27 preventing the studs 22 from being pulled out of the frame element 20, and a cylindrical portion 22c protruding from the frame element 20. The distal end 22e of the cylindrical portion 22c can be threaded.

The studs 22 can be made from a metallic material, in particular from titanium, and they can have a coating for galvanic corrosion resistance, depending on their location.

It is noted that seal compression stops 17 can be molded into the co-cured assembly and in particular in an outer circumferential surface of the closed border section 21 of the frame element 20 e.g. near the studs 22 on the side walls of the thermal barrier component 10.

The overall uncompressed thickness of the thermal barrier component 10, i.e. its dimension along the stacking direction S, can be not larger than 20 mm and can be in particular between 9 mm and 20 mm, preferably around 16 mm.

The surfaces of the thermal barrier component 10 are preferably flat in order to maintain an even cell compression, in particular for pouch cells.

As illustrated in **Fig. 4****,** several battery cells, in particular pouch cells, are stacked in order to form a battery module 45 (cf. **Fig. 4a**), and several (here nine) battery modules 45 are alternatingly stacked with thermal barrier components 10 according to the invention as described above in order to form a battery stack 40 shown in **Fig. 4b** in a partially exploded view. The stack 40 is accommodated in a housing 47 comprising a top stack wall 49, a bottom stack wall 51 and four circumferential stack walls 46, the circumferential stack walls 46 being positioned with respect to the stack 40 by inserting the studs 22 or inserts horizontally projecting from the thermal barrier components 10 into corresponding mounting holes provided in the circumferential stack walls 40 and fixed by connection elements, preferably nuts 31 screwed to the distal ends of the studs 22. The top wall 49 and the bottom wall 51 can be fixed to the circumferential walls 46.

In this manner, the thermal barrier components 10 can form a structural web in a vertical cell stack 40, resisting tension during various load cases such as thermal runaway, crash scenarios, flight loading and cell compression as well as preventing thermal runaway from propagating to neighboring modules, while remaining lightweight.

Several of these stacks 40, in the present example three stacks, can be grouped in order to form a battery assembly 50 according to an embodiment of the present invention as illustrated in **Fig. 4c****,** the assembly 50 furthermore comprising an exhaust manifold component 53 configured to discharge gases generated within the stacks 40 of a battery assembly 50 during normal operation or thermal runaway in a controlled manner through the exhaust opening 55.

These battery assemblies 50 can be used in particular in an electrical aircraft such as an eVTOL aircraft. In this case, the assemblies can be arranged, e.g., along the side walls of the aircraft so than the exhaust gases can be discharged from the aircraft through suitable outlets in the side walls.

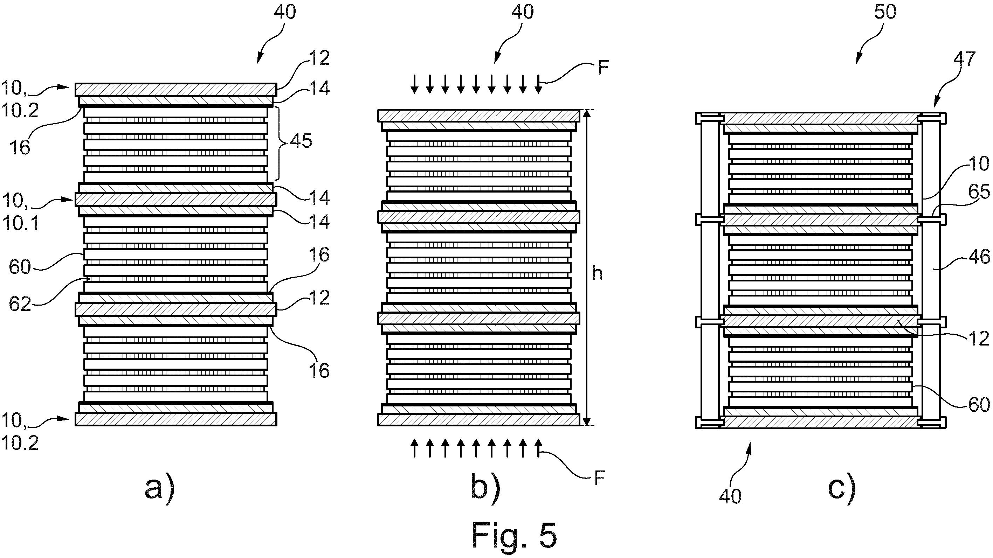

**Fig. 5** illustrates in Figs. a) to c) several stages of a process for manufacturing a battery assembly according to a further embodiment of the invention.

**Fig. 5 a)** shows a stack 40 comprising three battery modules 45, each battery module 45 comprising five battery cells 60, wherein foam pads 62 are provided between adjacent cells 60 of a module 45 in order to provide a homogeneous cell compression. The number of modules and battery cells in the figure is only chosen for the purpose of illustration.

The battery modules 45 are alternatingly stacked with thermal barrier components 10 according to the invention.

It is noted that two different types 10.1, 10.2 of thermal barrier components 10 are used.

Inside the stack 40, between adjacent battery modules 45, a first type 10.1 of a thermal barrier component 10 is provided, which has two thermal insulation layers 14 provided on both sides of the core layer 12 and two erosion barrier layers 16 forming the outermost layers on opposite sides of the thermal barrier component 10.

The ends of the stack 40 are formed by a second type 10.2 of thermal barrier component 10 according to the invention with only one thermal insulation layer 14 provided on that side of the core layer 12 facing towards the interior of the stack 40 and only one erosion barrier layer 16 provided on that side of the insulation layer 14 facing towards the interior of the stack 40.

Both types of thermal barrier component 10 in this embodiment furthermore differ from the thermal barrier component 10 according to the first embodiment in that they do not comprise any integrated studs or inserts.

After forming the battery stack 40 by alternatingly stacking the battery modules 45 and the thermal barrier components 10, the stack 40 is compressed as indicated by the arrows F in **Fig. 5b****),** e.g. to a predefined stack height h.

Then, as illustrated in **Fig. 5c****),** in order to form the battery assembly 50, the compressed stack 40 is accommodated in a housing 47, and the thermal barrier components 10 are attached to the housing 47 by fasteners 65 connecting side walls 46 of the housing 47 to the core layers 12 of the thermal barrier components 10 and in particular to the frame elements of the core layers 12 that are not visible in **Fig. 5c****).** Each fastener 65 can be inserted from outside through a side wall 46 of the housing and into the respective thermal barrier component 10.

In the illustrated example, the two outermost thermal barrier components 10 according to an embodiment of the invention form a top and a bottom wall of the housing 47, but it is of course also possible to use a separate, conventional top and/or bottom wall for the housing 47, instead of or in addition to these outermost thermal barrier components 10 as shown in **Fig. 5c****).**

It is noted that the thermal barrier component 10 can be offset from the circumferential walls 46 by a given distance, e.g. of around 1 mm to allow assembly and fitting of sealing components (not shown).

Finally, it is noted that **Fig. 5** is extremely simplified and does not show any details concerning the electrical connection of the battery cells 60.

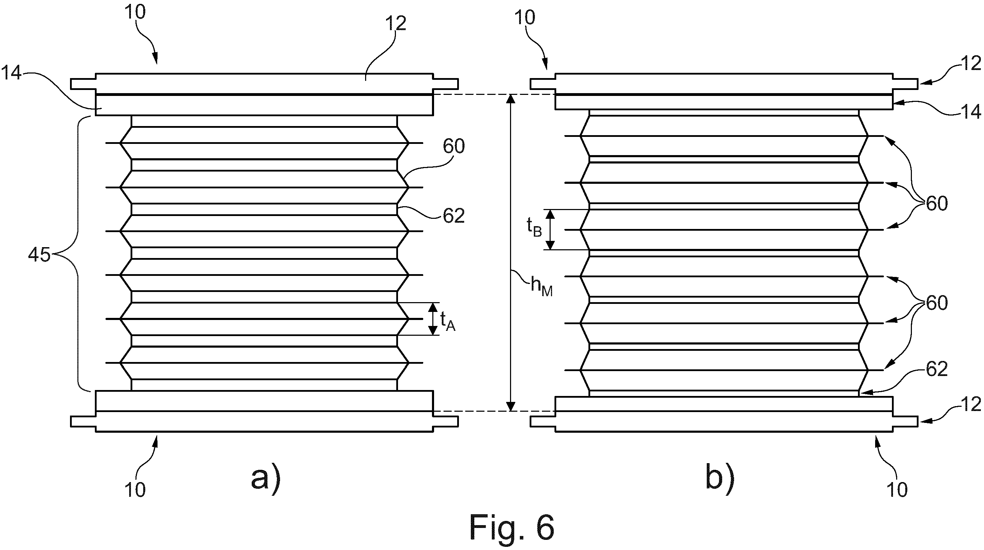

**Fig. 6** shows in **Fig. 6 a)****,** also in a simplified form, a part of a battery stack of a battery assembly according to an embodiment of the invention in an initial state, the illustrated part comprising two thermal barrier components 10 according to an embodiment of the invention sandwiching a battery module 45 with six battery cells 60 in the form of pouch cells that are alternatingly stacked with seven foam pads 62. In **Fig. a)** the cell thickness t is at its minimum t_{A}.

During operation, when the battery cells 60 are repeatedly charged and discharged, battery swelling can occur as illustrated in **Fig. 6 b)** in which the cell thickness t is at its maximum ts. As the thermal barrier components 10 are fixedly connected to the side walls of the housing (not shown), the module height h_{M} remains unchanged, while the foam pads 62 and the thermal insulation layers 14 of the thermal barrier components 10 are compressed in order to account for the increased cell thickness.

**Fig. 7** illustrates why it is preferable to use a foam material instead of a conventional material such as rubber for the pads in between adjacent battery cells. It is a diagram showing the compression pressure p as a function of compression strain s for an exemplary rubber material and an exemplary foam material.

The curve for foam is non-linear and has a pronounced plateau region and therefore, the usable strain range Δε for a given fixed pressure range between a minimum pressure pₘᵢₙ and a maximum pressure pₘₐₓ is significantly larger than for a rubber material as shown in **Fig. 7****.** The changes of cell thickness due to swelling can therefore be accommodated with a thinner compression pad made from foam while still providing sufficient initial compression.

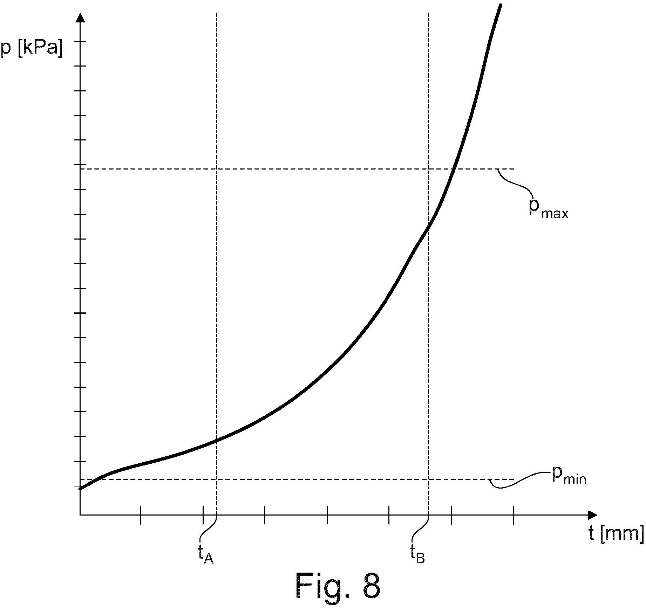

**Fig. 8** visualizes the compression pressure p in a battery module of a battery assembly according to an embodiment of the invention corresponding to **Fig. 6** as a function of the cell thickness t, wherein the cell thickness t_{A} corresponds to that of **Fig. 6a****)** and the cell thickness t_{B} corresponds to that of **Fig. 6b****).**

As illustrated in **Fig. 8****,** the module height and the materials and the thicknesses of the foam pads and the thermal insulation layers are chosen so that, in its initial state, at a cell thickness t_{A}, the compression pressure within a module is above a desired minimum limit value pₘᵢₙ, and even when the cells are swollen to their maximum thickness t_{B}, the compression pressure within the module remains below a desired maximum limit value pₘₐₓ.

Overall, the thermal barrier component according to the present invention, while being lightweight and easy to integrate in a battery assembly, can serve a dual purpose as a thermal barrier preventing thermal runaway to propagate and as a structural component for the battery assembly increasing the resistance to different mechanical loads.

## Claims

1. Thermal barrier component (10) for a battery assembly (50), the thermal barrier component (10) including a stack (11) of layers, the stack (11) comprising a core layer (12) and at least one thermal insulation layer (14) and/or an erosion barrier layer (16) arranged on at least one side of the core layer (12), the core layer (12) including an inlet (18) comprising a rigid material, preferably a rigid foam material, and a frame element (20) circumferentially surrounding the inlet (18).

2. Thermal barrier component (10) according to claim 1, furthermore comprising a plurality of studs (22) distributed around a circumference of the frame element (20), each stud (22) being partially embedded within the frame element (20) and partially projecting therefrom in an outward direction.

3. Thermal barrier component according to claim 1 or 2, wherein the stack (11) comprises at least two thermal insulation layers (14), one of the thermal insulation layers (14) being arranged on a first side of the core layer (12) and another one of the thermal insulation layers (14) being arranged on a second side of the core layer (12) opposite the first side.

4. Thermal barrier component (10) according to any of the preceding claims, wherein the core layer (12) furthermore comprises two cover panels (24) between which both the inlet (18) and the frame element (20) are disposed.

5. Thermal barrier component (10) according to any of the preceding claims, wherein the stack (11) furthermore comprises at least one erosion barrier layer (16) forming an outermost layer of the stack (11), preferably two erosion barrier layers (16) forming outermost layers on opposite sides of the stack (11).

6. Thermal barrier component (10) according to any of the preceding claims, wherein the stack (11) is symmetrical with respect to a middle plane (M) passing through the core layer (12).

7. Thermal barrier component (10) according to any of the preceding claims, wherein the frame element (20) comprises a closed border section (21) and at least one inner bridge section (23) connecting opposite sides of the border section (21), and wherein the inlet (18) comprises at least two inlet portions (19) separated by the bridge section (23).

8. Thermal barrier component (10) according to any of the preceding claims, wherein each of the studs (22) has a retaining protrusion (27) preventing the stud (22) from being pulled out of the frame element (20).

9. Thermal barrier component (10) according to any of the preceding claims, furthermore comprising a connector plate (39) and an electrically insulating connector plate holder (26), the connector plate holder (26) having a mounting surface (28) for the connector plate (39) on a first side and being connected to an edge region of the stack (11) of layers on a second side of the connector plate holder (26) opposite the first side.

10. Thermal barrier component (10) according to claim 6, wherein the connector plate holder (26) furthermore comprises a mounting groove (30) on the second side of the connector plate holder, (26) wherein an edge region of the core layer (12) of the stack (11) of layers is inserted into the mounting groove (30).

11. Thermal barrier component (10) according to any of the preceding claims, wherein the rigid material of the inlet (18) is a structural foam material, e.g. based on polymethacrylimide (PMI) or an aluminum honeycomb structure, and/or wherein the frame element (20) comprises a polymer material, preferably a fiber-reinforced polymer material, in particular a glass fiber-reinforced polymer material,
and/or wherein the cover panels (24) comprise a carbon fiber-reinforced polymer, in particular a woven carbon fiber-reinforced polymer,
and/or wherein the studs (22) comprise a metal material, in particular titanium.

12. Thermal barrier component (10) according to any of the preceding claims, wherein the thermal insulation layer (14) comprises a silica aerogel, in particular in the form of blankets incorporating silica aerogel into non-woven fibers; and/or
wherein the erosion barrier layer (16) comprises a fiber-reinforced polymer, preferably a carbon fiber-reinforced polymer, in particular a phenolic carbon fiber-reinforced polymer.

13. Thermal barrier component (10) according to claim 2 and 4, in particular in combination with any of the other preceding claims, wherein the inlet (18), the frame element (20) and the studs (22) are attached to the cover panels (24) of the core layer (12) by co-curing by means of film adhesives.

14. Battery assembly (50) comprising a housing (47) and at least one battery stack (40) accommodated within the housing (47), each battery stack (40) comprising at least one thermal barrier component (10), preferably according to any of the preceding claims, and at least one battery module (45) with at least one battery cell (60), the battery module/modules (45) and the thermal barrier component/components (10) being stacked in an alternating manner, wherein the thermal barrier component/components (10) is/are fixedly attached to the housing (47).

15. Battery assembly (50) according to claim 14, wherein the thermal barrier component/components (10) of the stack (40) is/are attached to the housing (47) by means of studs (22) or inserts provided on or integrated with the thermal barrier component/components (10), or by means of separate fasteners (65) connecting the housing (47) to the thermal barrier component/components (10).

16. Battery assembly (50) according to claims 14 or 15, wherein foam pads are arranged between adjacent battery cells (60) of the battery module/modules (45).

17. Process for manufacturing a thermal barrier component (10) according to any of the claims 1 to 13, the process comprising the following steps:
forming a core layer (12);
arranging at least one thermal insulation layer (14) and/or at least one erosion barrier layer (16) on at least one surface of the core layer (12) in order to form a stack (11) of layers,
wherein the step of forming the core layer (12) comprises:
providing an inlet (18) comprising a rigid material and a frame element (20) circumferentially surrounding the inlet (18);
co-curing the inlet (18) and the frame element (20).

18. Process for manufacturing a battery assembly according to any of claims 14 to 16, the process comprising the following steps:
providing at least one thermal barrier component (10), preferably several thermal barrier components (10), the step of providing the at least one thermal barrier component (10) preferably comprising the process of claim 17,
providing at least one battery module (45), preferably a plurality of battery modules (45), each battery module (45) comprising at least one battery cell (60), preferably a plurality of stacked battery cells (60),
stacking the thermal barrier component/components (10) and the battery module/modules (45) in an alternating manner in order to form a battery stack (40);
(h); compressing the battery stack, preferably to a predefined stack height
accommodating the compressed battery stack (40) in a housing (47); and
attaching the thermal barrier component/components (10) of the battery stack (40) to the housing (47).
